# EUROPÄISCHE PATENTSCHRIFT

(11) **EP 3 018 379 B1**
(45) Veröffentlichungstag und Bekanntmachung des Hinweises auf die Patenterteilung: **07.11.2018**
(21) Anmeldenummer: 15002400.8
(22) Anmeldetag: 13.08.2015
(51) Int. Cl.: F16D 55/00

(54) **ABSCHIRMVORRICHTUNG FÜR EINE BREMSSCHEIBE**
COVER DEVICE FOR A BRAKE DISC
DISPOSITIF DE BLINDAGE POUR UN DISQUE DE FREIN

(30) Priorität: 04.11.2014 DE 102014016235
(43) Veröffentlichungstag der Anmeldung: 11.05.2016
(73) Patentinhaber: MAN Truck & Bus AG, 80995 München (DE)
(72) Erfinder: Wittmann, Thomas, 86368 Gersthofen (DE); Butz, Matthias, 80637 München (DE); Orgler, Florian, 80335 München (DE)
(74) Vertreter: v. Bezold & Partner Patentanwälte - PartG mbB

(56) Entgegenhaltungen:
- EP-A1- 1 570 189
- FR-A1- 2 858 033
- US-A- 4 085 824
- US-A1- 2008 053 762

## Beschreibung

Die Erfindung betrifft eine Bremsscheibenabschirmvorrichtung für eine Scheibenbremse eines Kraftfahrzeugs, insbesondere eines Nutzfahrzeugs. Eine gattungsgemäße Bremsscheibenabschirmvorrichtung geht z.B. aus FR-A-2 858 033 hervor.

Zum Schutz von Bremsscheiben und Bremsbelägen kommen bei Kraftfahrzeugen üblicherweise Abschirmvorrichtungen, wie aus der DE 10 2005 059 071 A1 bekannt, zum Einsatz. Diese decken die Bremsscheibe auf ihrer radabgewandten Seite bzw. an ihrer zu einem Fahrzeugaufbau weisenden Seite ab und verhindern somit das Eintreten von Staub und Schmutz, die zu unerwünschtem abrasiven Verschleiß der Reibpartner führen können. Daneben müssen diese Abdeckungen jedoch auch eine ausreichende Kühlung der Bremsscheibe gewährleisten.
Nach dem Stand der Technik sind zur Erfüllung dieser zwei Hauptaufgaben unterschiedliche Lösungen und Ansätze bekannt.
Betreffend die Form weisen Abschirmvorrichtungen, je nach Größe der verwendeten Radbremse, üblicherweise eine offene oder geschlossene Kreisform auf. Im Nutzfahrzeugbereich kommen bei Trommelbremsen üblicherweise mindestens zwei offene Abschirmvorrichtungen zum Einsatz, die dann im Verbund eine kreisrunde Abdeckung ergeben. Bei Scheibenbremsen hat die Abschirmvorrichtung auf Grund des Bewegungsraums des Schwimmsattels jedoch meist nur eine halb offene Form, welche dann den Bereich unter der Radbremse abdeckt. Derart halb offene Formen, wie z. B. in der DE 10 2008 022 967 A1 beschrieben, ermöglichen dann einen einfacheren Wechsel der Abschirmvorrichtung, ohne die Bremsscheiben oder -trommeln demontieren zu müssen. Im Gegensatz dazu sind aus dem PKW-Bereich auf Grund der kleineren Radbremsengrößen auch einteilig geschlossene Formen, wie in der DE 10 2004 044 514 A1 offenbart, möglich, wodurch die Steifigkeit der Abschirmvorrichtung erhöht wird.
Die Kühlung der Bremsscheiben erfolgt nach dem Stand der Technik üblicherweise durch Luftdurchtrittsöffnungen in Form von einfachen Schlitzen oder Luftleitelementen, wie beispielsweise in der DE 10 2004 044 514 A1 beschrieben. Diese können dabei entweder axial wie in der DE 10 2011 119 435 A1 und der US 6155650 A offenbart, oder radial in der größten Abschirmfläche, wie in DE 10 2004 044 514 A1 offenbart, angeordnet sein.

Mit der Größe der verwendeten Bremsscheiben steigt auch die abzudeckende Fläche durch die Abschirmvorrichtung. Dadurch ergibt sich die Notwendigkeit, diese zu versteifen, um die Schwingungsneigung der Abschirmvorrichtung zu reduzieren, welche sonst zu ungewollten Geräuschen oder sogar zu einem Schwingungsbruch führen könnte. Dazu können in die ebenen Fläche Sicken wie in der DE 10 155 645 A1 eingebracht werden oder durch einen entsprechenden Bord das gesamte Bauteil verstärkt werden.

Die bekannten Methoden zur Versteifung einer großen ebenen Fläche durch eingebrachte Sicken sind nachteilhaft, wenn genau an dieser Stelle Luftdurchtrittsöffnungen oder Luftleitelemente vorgesehen sind. Diese sind daher oftmals sehr klein ausgeführt, wodurch sich wiederum der Luftstrom verringert. Bei der Verwendung von Luftleitelementen kann zudem der zugeführte Luftstrom über die schräg angestellten Leitbleche die Abschirmvorrichtung durch die daraus entstehenden Querkräfte zu einer Schwingung anregen. Durch die zusätzlichen Schwingungsbelastungen, welche vom Fahrzeugeinsatz herrühren, erfahren die Verbindungselemente zwischen Abschirmkörper und Achsteilen dann hohe Belastungen, die bis zum Bruch führen können.

Betreffend Ihre Anbindung werden die Abschirmvorrichtungen entweder direkt an einen Bremsenträger oder Achsschenkel verschraubt, wie in der EP 1 191 245 A2 und der EP 2 148 110 A1 zu erkennen, oder über weitere Zwischenelemente an diese angebunden, wie z. B. in der EP 1 570 189 A1 beschrieben. Als Verschraubungselemente können dazu zusätzliche Schrauben verwendet werden. Nachteilig hieran ist, dass hierfür entsprechende Anschlüsse an der Achse nötig sind, woraus weitere Kosten und Montageaufwände entstehen. Zur Vermeidung dieses Nachteils offenbart die DE 10 2005 059 071 A1 eine Bremsscheibenabschirmvorrichtung, bei der die Abdeckeinrichtung und der Bremssattel am Bremsträger über eine gemeinsame Schraubenverbindung festgelegt werden. Nachteilig an dieser Bremsscheibenabschirmvorrichtung ist jedoch, dass sie nur begrenzt versteift ausgeführt werden kann, insbesondere dann, wenn noch zusätzlich Luftdurchtrittsöffnungen zur Kühlung notwendig wären und in das Abschirmblech eingebracht werden müssten.

Es ist somit eine Aufgabe der Erfindung, eine verbesserte Bremsscheibenabschirmvorrichtung bereitzustellen, mit der Nachteile herkömmlicher Bremsscheibenabschirmvorrichtungen vermieden werden können. Die Aufgabe der Erfindung ist es insbesondere, eine Bremsscheibenabschirmvorrichtung bereitzustellen, die mit geringen Kosten und unter geringem Montageaufwand an einem Bremsträger festlegbar ist und zugleich eine hohe Dauerfestigkeit aufweist, insbesondere dann, wenn ferner große Luftdurchtrittsöffnungen eingebracht sind.

Diese Aufgaben werden durch eine Bremsscheibenabschirmvorrichtung mit den Merkmalen des Hauptanspruchs gelöst. Vorteilhafte Ausführungsformen und Anwendungen der Erfindung sind Gegenstand der abhängigen Ansprüche und werden in der folgenden Beschreibung unter teilweiser Bezugnahme auf die Figuren näher erläutert.

Gemäß allgemeinen Gesichtspunkten der Erfindung werden die genannten Aufgaben durch eine Bremsscheibenabschirmvorrichtung für eine Scheibenbremse eines Kraftfahrzeugs, insbesondere Nutzfahrzeugs, gelöst, die einen Abschirmkörper und mindestens ein Anbindungselement aufweist.

Der Abschirmkörper ist mittels einer Bremssattelverschraubung mittelbar oder unmittelbar an einem Achsteil, an dem die Scheibenbremse und/oder ein Bremssattelträger festgemacht ist, festlegbar. Das Achsteil dient somit als Träger der Bremse und kann auch als Bremsträger bezeichnet werden. Das Achsteil kann beispielsweise als Achsschenkel oder als Bremsflansch ausgebildet sein. Der Abschirmkörper und die Scheibenbremse, insbesondere der Bremssattel, können somit in an sich bekannter Weise am Achsteil zumindest eine gemeinsame Schraubenverbindung aufweisen. Vorzugsweise sind zwei gemeinsame Schraubenverbindungen vorgesehen. Hierdurch ergibt sich eine kostengünstige Montage, da keine zusätzlichen Gewinde am Bremsträger erforderlich sind und die Bremsscheibenabschirmvorrichtung unter Verwendung der bereits vorhandenen Bremssattelverschraubung montiert werden kann.

Der Abschirmkörper umfasst ferner einen Seitenwandbereich zum zumindest teilweisen Abdecken einer Bremsscheibe der Scheibenbremse an ihrer zu einem Fahrzeugaufbau weisenden Seite und eine Versteifungsfläche, die im Wesentlichen senkrecht zu dem Seitenwandbereich ausgerichtet ist. Der Abschirmkörper, welcher an einem während der Fahrt drehfesten Bauteil des Fahrzeugs angeordnet ist, kann somit zum Abdecken eines nicht durch einen Bremssattel und/oder Bremssattelträgers abgedeckten Bereichs einer Bremsscheibe ausgeführt sein und ist üblicherweise als Blechformteil ausgeführt.

Das Anbindungselement, dessen Wandstärke vorzugsweise größer als eine Wandstärke des Abschirmkörpers ist und/oder dessen Festigkeitswert größer als ein Festigkeitswert des Abschirmkörpers ist, umfasst einen ersten Bereich, der am Seitenwandbereich des Abschirmkörpers befestigt ist, einen zweiten Bereich, der an der Versteifungsfläche des Abschirmkörpers befestigt ist, und einen dritten Bereich, der an einer Stelle des Abschirmkörpers befestigt ist, an der der Abschirmkörper im montierten Zustand mit Hilfe der Bremssattelverschraubung an dem Achsteil festgelegt ist. Durch das Anbindungselement und dessen erfindungsgemäße Befestigung am Abschirmkörper kann die Gesamtsteifigkeit der Bremsscheibenabschirmvorrichtung erhöht werden. Das Anbindungselement kann als ein aus Flachmaterial gebildetes einteiliges Bauteil ausgebildet sein.

Das Anbindungselement wird zur Befestigung des Abschirmkörpers an dem Achsteil verwendet, so dass der Abschirmkörper mittelbar über das Anbindungselement an einem Achsteil der Scheibenbremse festlegbar ist. Hierbei ist der dritte Bereich des Anbindungselements als Anlagefläche ausgeführt, die sich im montierten Zustand der Bremsscheibenabschirmvorrichtung mit einer dem Abschirmkörper abgewandten Seite im Bereich einer Schraubenauflage der Bremssattelverschraubung gegen das Achsteil abstützt.

Bei einer vorteilhaften Variante dieser Ausgestaltungsform sind eine Durchgangsöffnung des Abschirmkörpers und eine Durchgangsöffnung des dritten Bereichs des Anbindungselements im montierten Zustand der Bremsscheibenabschirmvorrichtung bzw. des Abschirmkörpers fluchtend zueinander und zu einem Innengewinde der Bremssattelverschraubung angeordnet. Ferner ist ein Durchmesser der Durchgangsöffnung des Abschirmkörpers größer als ein Durchmesser eines Schraubenkopfes einer in das Innengewinde eingreifenden Schraube der Bremssattelverschraubung, wobei der Schraubenkopf der Schraube sich auf einem die Durchgangsöffnung des dritten Bereichs einfassenden Durchgangsöffnungsrand abstützt.

Dies bietet den Vorteil, dass die Bremsscheibenabschirmvorrichtung unter Ausnutzung der bereits vorhandenen Bremssattelverschraubung montiert werden kann, dass die Vorspannkraft der Schraube nicht auf den Abschirmkörper, sondern auf das Befestigungselement mit seiner dickeren Wandstärke wirkt und dass das Befestigungselement ferner eine vorteilhafte Kraftverteilung und Versteifungswirkung ermöglicht, da es nicht nur im Bereich der Bremssattelverschraubung, sondern zusätzlich noch an mindestens zwei weiteren Stellen, d. h. dem ersten und dem zweiten Bereich, mit dem Abschirmkörper verbunden ist.

Gemäß einem weiteren Aspekt der Erfindung kann der Seitenwandbereich an einem radial außen liegenden Außensegment zu einem Kragen angewinkelt sein, wobei der Kragen die Versteifungsfläche ausbildet, an der der zweite Bereich des Anbindungselements befestigt ist. Ein solcher Kragen wird nachfolgend auch als Bord bezeichnet. Einer derartiger Kragen bzw. Bord erhöht die Versteifung des Abschirmkörpers und stellt eine äußere Abkantung als Teil eines Außenrandbereichs des Abschirmkörpers dar, der vorzugsweise einen Umfangsrand der Bremsscheibe zumindest abschnittsweise einfasst. Der Kragen ist im Wesentlichen senkrecht zur Innenseite der Fahrzeugbremse, d. h. zu der Bremsscheibe hin, gekrümmt.

Eine weitere vorteilhafte Variante sieht hierbei vor, dass der Kragen an einer Stelle, an der er mit dem zweiten Bereich des Anbindungselements verbunden wird, eine plane Anlagefläche aufweist und der zweite Bereich flächig an der planen Anlagefläche aufliegt. Eine äußere Umfangskontur des Kragens kann somit an der Anbindungsstelle des Anbindungselements nicht kreisbogenförmig, sondern gerade ausgeführt sein. Dadurch kann vermieden werden, dass beim Verbinden der beiden Flächen ein Spalt entsteht.

Im Rahmen der Erfindung besteht ferner die Möglichkeit, dass der Abschirmkörper im Bereich der Anbindungsstellen zu dem Anbindungselement mit planen Anlageflächen versehen ist und dass der erste, der zweite und der dritte Bereich des Anbindungselement jeweils eine plane Auflagefläche aufweisen, die flächig auf einer der planen Anlageflächen des Abschirmkörpers voll aufliegt und mit dieser durch Vernieten, Verschrauben, Schweißen, Kleben und/oder Löten punktuell verbunden ist. Die Verbindungsangriffspunkte des Anbindungselement mit dem Abschirmkörper sind somit vorteilhaft über mehrere Bereiche des Abschirmkörpers verteilt und insbesondere zumindest zum Teil beabstandet zu der Verschraubungsstelle der Bremsscheibenabschirmvorrichtung mit dem Bremsträger. Dies ermöglicht größere Hebelkräfte als im Fall einer Unterlegscheibe als Anbindungselement wie in der DE 10 2005 059 071 A1 offenbart, die nur an der Verschraubungsstelle am Abschirmblech befestigt ist.

Ferner kann der Abschirmkörper in dem Bereich, wo er am Achsteil befestigt wird, eine Befestigungserhebung aufweisen, und der zweite Bereich des Anbindungselements kann in diesem Fall an einem radial außen liegenden Bereich der Befestigungserhebung befestigt sein. In einer Seitenansicht auf den Abschirmkörper auf die der Bremsscheibe zugewandten Seite des Abschirmkörpers erscheint die Befestigungserhebung als Vertiefung bzw. als Sicke. Die Befestigungserhebung kann eine Ausnehmung bzw. Aussparung für einen Bremssattelträger aufweisen. Die Befestigungserhebung dient einerseits zur Erhöhung der Bauteilsteifigkeit, andererseits zur teilweisen Abdeckung eines Achsteils und/oder eines daran befestigten Bremssattelträgers.

Die Befestigung des zweiten Bereichs des Anbindungselements an einer Versteifungsfläche der Befestigungserhebung hat den Vorteil, dass die Befestigungserhebung eine im Vergleich zum restlichen Kragen größere Versteifungsfläche aufweist, die zum Seitenwandbereich im Wesentlichen senkrecht verläuft, und somit eine besonders gute Erhöhung der Versteifungswirkung mittels des Anbindungselements ermöglicht wird. Ferner kann das Anbindungselement baulich kompakt ausgeführt sein, da die Befestigungserhebung zudem nahe an der Verschraubungsstelle angeordnet ist.

Eine besonders kompakte Ausführung des Befestigungselements kann erreicht werden, wenn der erste Bereich des Anbindungselements an einem radial innen liegenden Bereich des Seitenwandbereichs, an dem die Befestigungserhebung angeformt ist, aufliegt.

Hierbei besteht ferner die Möglichkeit, dass der erste Bereich des Anbindungselements durch zwei im Wesentlichen rechtwinklige Biegungen in entgegengesetzte Biegerichtungen oder durch eine U-förmige Biegung mit dem zweiten Bereich einteilig verbunden ist, was eine besonders vorteilhafte Versteifungswirkung des Anbindungselement ermöglicht.

Ferner kann an jedem der beiden Endbereiche des Abschirmkörpers, an denen der Abschirmkörper im montierten Zustand mit Hilfe der Bremssattelverschraubung an einem Bremsträger festgelegt wird, ein Anbindungselement vorgesehen sein.

Eine weitere Ausführungsform sieht hierbei vor, dass die beiden ersten Bereiche der beiden Anbindungselemente über einen Versteifungsabschnitt, der sich entlang eines radial innen liegenden Innensegments des Seitenwandbereichs erstreckt, miteinander verbunden sind. Dadurch wird die Versteifungswirkung zusätzlich erhöht. Die beiden Anbindungselemente können über den Versteifungsabschnitt zu einem einteiligen Bauteil verbunden werden. Der Versteifungsabschnitt kann auf dem radial innen liegenden Innensegments des Seitenwandbereichs aufliegen und dort mit diesem punktuell, z. B. über Schweißpunkte, verbunden sein.

Anstatt des vorgenannten Versteifungsabschnitts oder zusätzlich dazu kann der Abschirmkörper zur Erhöhung der Steifigkeit an einem radial innen liegenden Rand zu einem Kragen angewinkelt sein.

Der Seitenwandbereich und die Versteifungsfläche sind vorzugsweise jeweils biegesteif ausgeführt sind. Insbesondere kann der Seitenwandbereich um eine erste Achse Y biegesteif ausgeführt sein, die senkrecht zum Seitenwandbereich ist, und die Versteifungsfläche kann um eine zweite und eine dritte Achse X, Z biegesteif ausgeführt sein, wobei die zweite Achse X und die dritte Achse Z zueinander und zu der ersten Achse Y senkrecht sind. Das Anbindungselement verbindet somit Flächen, die in unterschiedlichen Richtungen eine Steifigkeit aufweisen, und erhöht dadurch die Gesamtsteifigkeit der Bremsscheibenabschirmvorrichtung.

Zur Kühlung der Bremsscheiben kann der Seitenwandbereich Luftdurchtrittsöffnungen aufweisen, an denen vorzugsweise Luftleitelemente, z. B. in Form von Ablenkrippen, angeformt sind. Die Luftdurchtrittsöffnungen sind hierbei in einem Bereich des Seitenwandbereichs eingebracht, der nicht von dem ersten Bereich des Anbindungselements überdeckt ist.

Ein weiterer Aspekt der Erfindung betrifft ein Kraftfahrzeug, insbesondere Nutzfahrzeug, aufweisend eine Bremsscheibenabschirmvorrichtung wie hierin offenbart.

Die zuvor beschriebenen bevorzugten Ausführungsformen und Merkmale der Erfindung sind beliebig miteinander kombinierbar. Weitere Einzelheiten und Vorteile der Erfindung werden im Folgenden unter Bezug auf die beigefügten Zeichnungen beschrieben. Es zeigen:
- Figur 1: eine Perspektivansicht einer Scheibenbremse;
- Figur 2: eine Perspektivansicht einer der Bremsscheibe zugewandten Seite einer Bremsscheibenabschirmvorrichtung gemäß einem Ausführungsbeispiel;
- Figur 3: eine Seitenansicht einer der Bremsscheibe zugewandten Seite der Bremsscheibenabschirmvorrichtung aus Figur 2;
- Figur 4: einen Schnitt entlang der Linie A-A in Figur 3;
- Figur 5: eine vergrößerte Darstellung des Bereichs Z in Figur 3; und
- Figur 6: eine Perspektivansicht einer der Bremsscheibe zugewandten Seite einer Bremsscheibenabschirmvorrichtung gemäß einem weiteren Ausführungsbeispiel.

Gleiche oder funktional äquivalente Teile sind in den Figuren mit denselben Bezugszeichen versehen, so dass die in den Figuren gezeigten verschiedenen Ansichten der Bremsscheibenabschirmvorrichtung auch aus sich heraus verständlich sind.

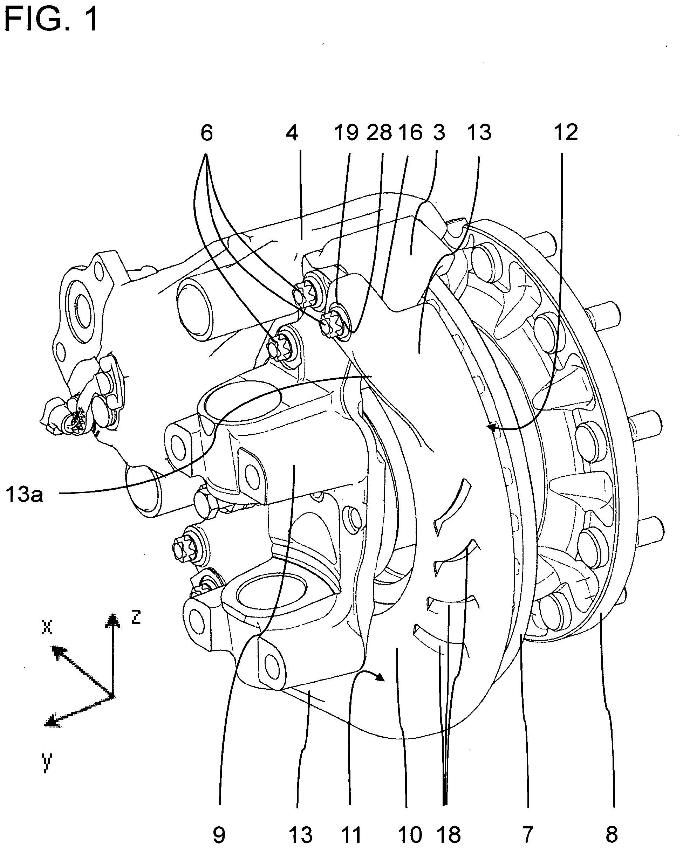

Figur 1 zeigt eine Perspektivansicht einer Scheibenbremse eines Nutzfahrzeugs, wobei die Bremsscheibe 7 drehfest mit der sich drehenden Radachse gekoppelt ist. In Figur 1 ist lediglich die Radnabe 8 gezeigt. Die Bremsscheibe 7 wird an ihrer zu einem Fahrzeugaufbau weisenden Seite von einem Abschirmkörper 10 abgeschirmt, der einen nicht durch einen Bremssattel 4 oder Bremssattelträger 3 abgedeckten Bereich der Bremsscheibe 7 überdeckt. Der Abschirmkörper 10 ist vorliegend ein sichelförmiges Blechformteil, das an einem während der Fahrt drehfesten Bauteil des Fahrzeugs angeordnet ist. Der Abschirmkörper 10 ist unter Ausnutzug der vorhandenen Bremssattelverschraubung 6 über ein Anbindungselement mittelbar an einem Achsteil 9, vorliegend als lenkbarer Achsschenkel ausgeführt, festgelegt. Am Achsteil 9 ist ferner die Scheibenbremse festgemacht, Der Bremssattelträger 3 ist über einen Trägerarm an dem lenkbaren Achsschenkel 9 befestigt. Statt an einem lenkbaren Achsschenkel 9 kann der Bremssattelträger 3 auch an einem Bremsflansch einer Starrachse befestigt sein.

Der Abschirmkörper 10 weist an den beiden Endbereichen, an denen er am Achsteil 9 befestigt wird, eine Befestigungserhebung 13 auf. Die Befestigungserhebung 13 weist ferner eine an das Achsteil 9 formangepasste Ausnehmung 16 auf, um dieses teilweise zu umgreifen. An einem oberen Endabschnitt 13a der Befestigungserhebung 13 ist eine Durchgangsöffnung 19 in diese eingebracht, deren Durchmesser größer als ein Durchmesser eines Schraubenkopfes einer in das Innengewinde eingreifen Schraube 6 der Bremssattelverschraubung ist. In Figur 1 ist von der in die Durchgangsöffnung 19 eingeführten Schraube 6 nur noch der Schraubenkopf zu sehen. Es ist erkennbar, dass der Schraubenkopfdurchmesser kleiner als der Durchmesser der Durchgangsöffnung 19 ist. Der Schraubenkopf stützt sich vielmehr auf einen Durchgangsöffnungsrand ab, der eine Durchgangsöffnung 28 eines Anbindungselements einfasst, welches anhand der nachfolgenden Figuren noch detailliert erläutert wird. Die Vorspannkraft der Schraube 6 wirkt somit nicht direkt auf den Abschirmkörper 10, sondern stattdessen auf das Anbindungselement. Die Durchgangsöffnung 28 des Anbindungselements und die Durchgangsöffnung 19 des Abschirmkörpers 10 sind fluchtend zueinander und zu einem Innengewinde (nicht sichtbar) der Bremssattelverschraubung angeordnet. Somit kann die in die Durchgangsöffnungen 19 und 28 eingreifende Schraube 6 der Bremssattelverschraubung auch zur Befestigung des Abschirmkörpers 10 genutzt werden, so dass keine zusätzlichen Gewinde am Achsteil 9 erforderlich sind und die Bremsscheibenabschirmvorrichtung 1 unter Verwendung der bereits vorhandenen Bremssattelverschraubung montiert werden kann.

In Figur 1 ist die untere Befestigungserhebung 13 fast vollständig von dem Achsschenkel 9 überdeckt. Hier erfolgt in gleicher Weise wie zuvor beschrieben die zweite Anbindung der Bremsscheibenabschirmvorrichtung 1 an dem Achsteil 9.

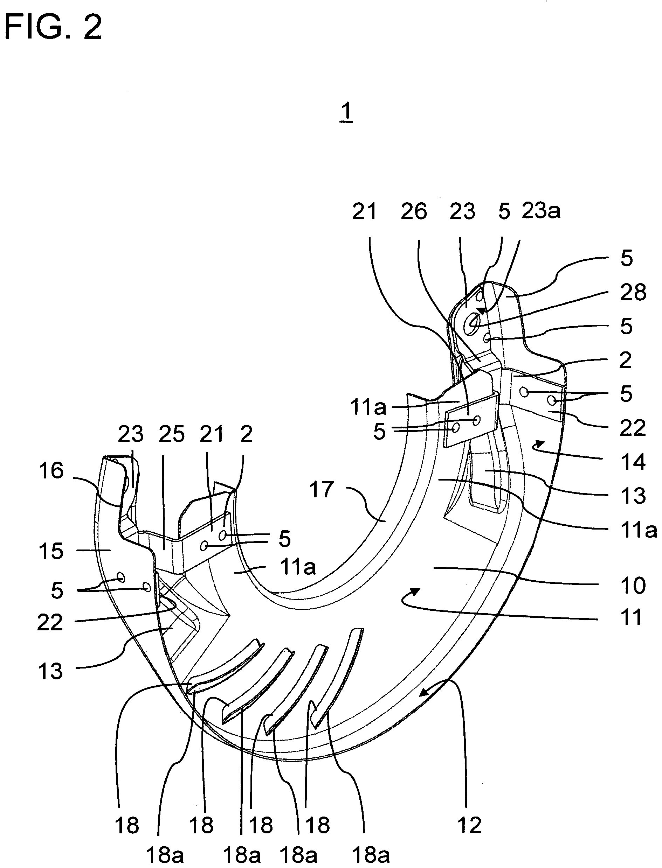

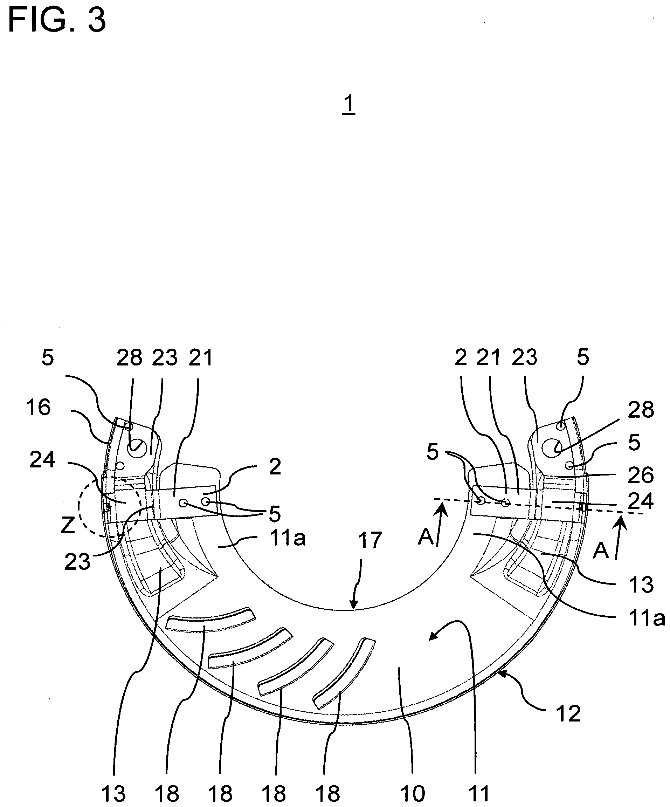

Die Figuren 2 und 3 zeigen die der Bremsscheibe zugewandte Seite der Bremsscheibenabschirmvorrichtung 1. Es ist zunächst erkennbar, dass der Abschirmkörper 10 einen planen Seitenwandbereich 11 aufweist, der zumindest teilweise eine dem Fahrzeugaufbau zugewandte Seite der Bremsscheibe 7 abdeckt. In den Seitenwandbereich 11 sind im Bereich zwischen den beiden Befestigungserhebungen 13 eine Reihe von Luftdurchtrittsöffnungen 18 eingebracht. An jeder der Luftdurchtrittsöffnungen 18 ist eine Ablenkrippe 18a angeformt, mittels der ein Luftstrom abgelenkt und von der Bremsscheibenoberfläche über die Luftdurchtrittsöffnungen 18 nach außen geleitet werden kann.

Der Seitenwandbereich 11 ist an einem radial außen liegenden Außensegment zu einem Kragen bzw. Bord 12 angewinkelt, der als Teil eines Außenrandbereichs des Abschirmkörpers 10 einen Umfangsrand der Bremsscheibe zumindest abschnittsweise einfasst. Der Kragen 12 ist im Wesentlichen senkrecht zur Innenseite der Fahrzeugbremse, d. h. zu der Bremsscheibe 7, hin gekrümmt und steht im Wesentlichen senkrecht auf dem Seitenwandbereich 11.

Gemäß der in den Figuren 2 und 3 gezeigten Ausführungsvariante des Abschirmkörpers 10 ist der Seitenwandbereich 11 ferner an einem radial innen liegenden Rand zu einem Kragen 17 angewinkelt.

Vorstehend wurde bereits erwähnt, dass die Anbindung des Abschirmkörpers 10 an dem Achsteil 9 über ein Anbindungselement erfolgt. Das hierfür verwendete Anbindungselement 2 ist als Bauteil aus einem Flachmaterial, z. B. als Blechschmiedeteil, ausgeführt. Das Anbindungselement weist einen ersten Bereich 21 auf, der am Seitenwandbereich 11 befestigt ist, insbesondere an einem radial innen liegenden Bereich 11a des Seitenwandbereichs 11, an dem die Befestigungserhebung 13 angeformt ist. Sowohl dieser erste Bereich 21 des Anbindungselements 2 als auch der Seitenwandbereich 11a bilden eine plane Anlagefläche aus, so dass der erste Bereich flächig auf dem Seitenwandbereich 11a aufliegt.

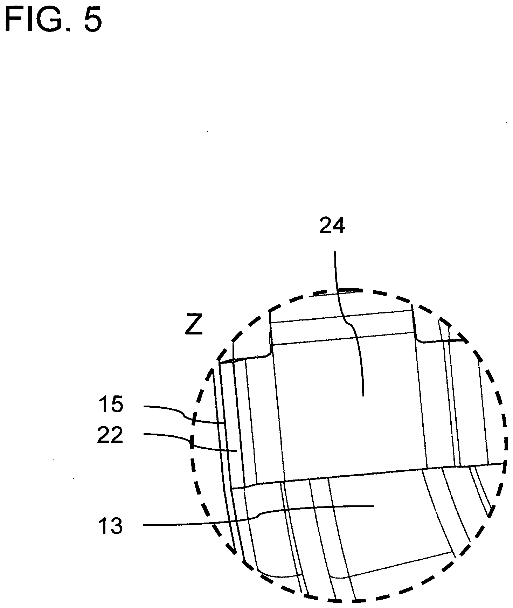

Das Anbindungselement 2 weist ferner einen zweiten Bereich 22 auf, der an der Innenseite des Kragens 12 befestigt ist, insbesondere an einer inneren Kragenfläche 14 der Befestigungserhebung 13 und an einer Stelle, die radial außen liegend zu dem ersten Bereich 21 angeordnet ist. Die innere Kragenfläche ist an dieser Stelle nicht gekrümmt, sondern plan zur Ausbildung einer planen Anlagefläche 15 ausgeführt, auf der der zweite Bereich 22 des Anbindungselements 2, der ebenfalls eine plane Anlagefläche aufweist, vollflächig aufliegt. Die ist in Figur 5 erkennbar. Die äußere Umfangskontur ist somit an der Anbindungsstelle des zweiten Bereichs 22 nicht kreisbogenförmig, sondern gerade und bildet die plane Auflagefläche 15 aus. Der Radius des Bordes 12 ist an dieser Stelle entsprechend ausgesetzt.

Das Anbindungselement 2 weist ferner einen dritten Bereich 23 auf, der an einer Stelle des Abschirmkörpers 10 befestigt ist, an der der Abschirmkörper 10 im montierten Zustand mit Hilfe der Bremssattelverschraubung 6 an dem Achsteil 9 festgelegt wird. In den Figuren 2 und 3 ist die Durchgangsöffnung 28 gezeigt, die fluchtend zu der korrespondierenden Durchgangsöffnung 19 des Abschirmkörpers 10 ausgerichtet ist, wie vorstehend beschrieben wurde. Der dritte Bereich 23 liegt mit seiner planen Unterseite ebenfalls flächig auf eine planen Auflagefläche des Abschirmkörpers 10 auf. Mit der als Abstützfläche 23a dienenden planen Oberseite stützt sich der dritte Bereich 23 im verschraubten Zustand gegen das Achsteil 9 ab.

Das Anbindungselement 2 ist mit den entsprechenden Auflageflächen des Abschirmkörpers 10 an den mit dem Bezugszeichen 5 gekennzeichneten Stellen punktverschweißt.

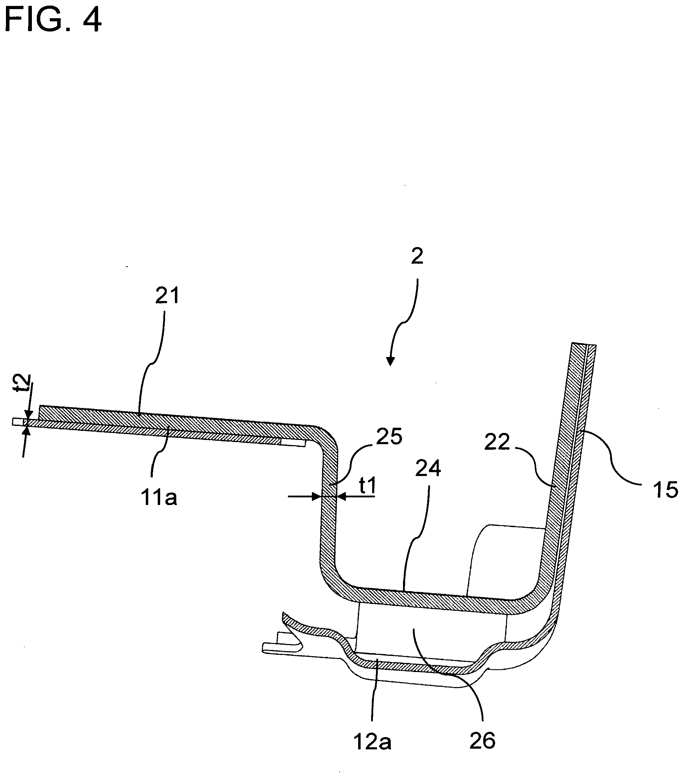

Der Seitenwandbereich 11, der mit dem ersten Bereich 21 verbunden ist, und die Versteifungsfläche 14, die mit dem zweiten Bereich 22 verbunden ist, sind biegesteif ausgeführt. Der Seitenwandbereich ist um die Achse Y (siehe Kennzeichnung in Figur 1) biegesteif ausgeführt, während die Versteifungsfläche 14 um die X-Ache und die Z-Achse biegesteif ausgeführt ist. Das Anbindungselement 2 verbindet somit Flächen, die in unterschiedlichen Richtungen eine Steifigkeit aufweisen, und erhöht dadurch die Gesamtsteifigkeit der Bremsscheibenabschirmvorrichtung 1. Hierbei ist die Wandstärke t1 des Anbindungselements 2 größer als eine Wandstärke t2 des Abschirmkörpers 10, was in Figur 4 dargestellt ist. Das Anbindungselement 2 ermöglicht somit eine stabile Anbindung des Abschirmkörpers 10 am Achsteil 9 und versteift diesen gleichzeitig, so dass im Mittelbereich große Luftschlitze 18 eingebracht werden können.

In Figur 4 ist ferner erkennbar, dass der erste Bereich 21 des Anbindungselements 2 durch zwei im Wesentlichen rechtwinklige Biegungen in entgegengesetzte Biegerichtungen (Bereiche 24 und 25 des Anbindungselements 2) mit dem zweiten Bereich 22 einteilig verbunden ist. Der Höhenunterschied zwischen dem Verbindungsbereich 24 und dem dritten Bereich 23 wird durch den Übergangsbereich 26 ausgeglichen.

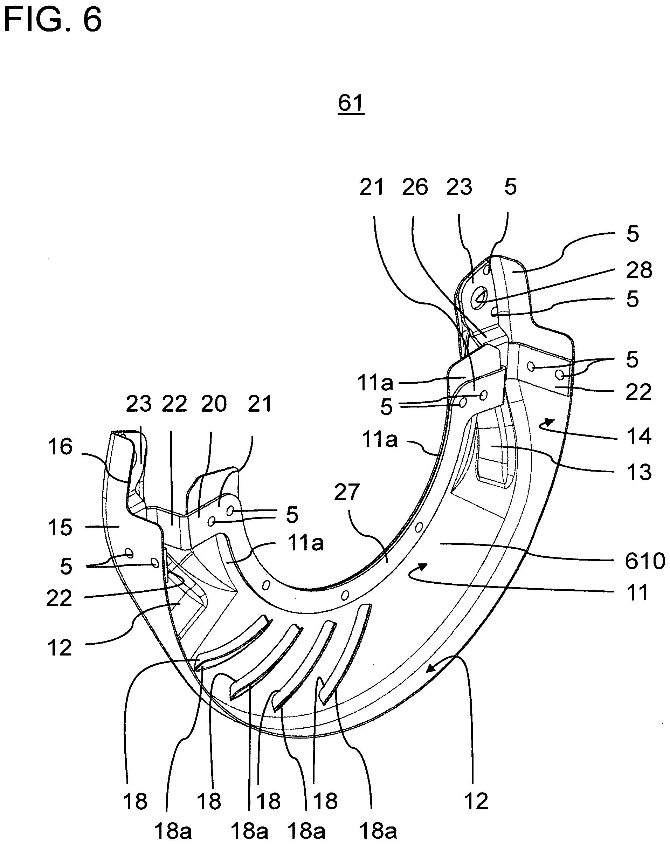

Figur 6 zeigt eine Perspektivansicht einer der Bremsscheibe zugewandten Seite einer Bremsscheibenabschirmvorrichtung 61 gemäß einem weiteren Ausführungsbeispiel. Der Abschirmkörper 610 unterscheidet sich von dem Abschirmkörper 10 der Figuren 2 bis 5 lediglich darin, dass am Innenrand kein Kragen angeformt ist.

Das Anbindungselement unterscheidet sich von den beiden Anbindungselementen 2 der Figuren 2 bis 5 lediglich darin, dass die beiden baugleichen Anbindungselemente 20, die in den gegenüberliegenden äußeren Endbereichen des Abschirmkörpers angeordnet sind, miteinander durch einen Versteifungsabschnitt 27 verbunden sind, der sich entlang eines radial innen liegenden Innensegments des Seitenwandbereichs 11 erstreckt und der die beiden ersten Bereiche 21 jeweils miteinander verbindet. Der sich kreisbogenförmig erstreckende Verbindungsbereich 27 liegt ebenfalls vollflächig auf dem Innensegment des Seitenwandbereichs 11 auf und ist dort punktuell verschweißt, was wiederum durch die Schweißpunkte 5 erkennbar ist.

Die Erfindung ist nicht auf die vorstehend beschriebenen bevorzugten Ausführungsbeispiele beschränkt. Vielmehr ist eine Vielzahl von Varianten und Abwandlungen möglich, die ebenfalls von dem Erfindungsgedanken Gebrauch machen und deshalb in den Schutzbereich fallen. Insbesondere beansprucht die Erfindung auch Schutz für den Gegenstand und die Merkmale der Unteransprüche unabhängig von den in Bezug genommenen Ansprüchen.

### Bezugszeichenliste

- 1: Abschirmvorrichtung
- 2: Anbindungselement
- 3: Bremsträger, insbesondere Bremssattelträger
- 4: Bremssattel
- 5: Schweißpunkt
- 6: Schraube der Bremssattelverschraubung
- 7: Bremsscheibe
- 8: Radnabe
- 9: Lenkbarer Achsschenkel
- 10: Abschirmkörper
- 11: Seitenwandbereich
- 11a: Seitenwandbereich auf Höhe der Befestigungserhebung
- 12: Äußerer Kragen
- 13: Befestigungserhebung
- 13a: Oberer Endabschnitt der Befestigungserhebung
- 14: Kragen im Bereich der Befestigungserhebung
- 15: Plane Auflagefläche des Kragens im Bereich des Anbindungselements
- 16: Aussparung
- 17: Innere Abkantung
- 18: Luftaustrittsöffnung
- 18a: Ablenkrippe
- 19: Durchgangsöffnung
- 20: Anbindungselement 2. Ausführungsvariante
- 21: Erster Bereich des Anbindungselements
- 22: Zweiter Bereich des Anbindungselement
- 23: Dritter Bereich des Anbindungselements
- 23a: Abstützfläche
- 24: Vierter Bereich des Anbindungselements
- 25: Fünfter Bereich des Anbindungselements
- 26: Gekrümmter Verbindungsabschnitt
- 27: Verbindungsabschnitt
- 28: Durchgangsbohrung
- 61: Abschirmvorrichtung
- 610: Abschirmkörper
- t1: Wandstärke Anbindungselement
- t2: Wandstärke Seitenwandfläche

## Patentansprüche

1. Bremsscheibenabschirmvorrichtung (1; 61) für eine Scheibenbremse eines Kraftfahrzeugs, insbesondere Nutzfahrzeugs, umfassend
(a) einen Abschirmkörper (10; 610), welcher mittels einer Bremssattelverschraubung (6) mittelbar oder unmittelbar an einem Achsteil (9), an dem die Scheibenbremse festgemacht ist, festlegbar ist und der einen Seitenwandbereich (11, 11a) zum zumindest teilweisen Abdecken einer Bremsscheibe (7) der Scheibenbremse an ihrer zu einem Fahrzeugaufbau weisenden Seite und eine Versteifungsfläche (14), die im Wesentlichen senkrecht zu dem Seitenwandbereich (11) ausgerichtet ist, aufweist; und
(b) ein Anbindungselement (2; 20), dessen Wandstärke (t1) vorzugsweise größer als eine Wandstärke (t2) des Abschirmkörpers (10; 610) ist, aufweisend einen ersten Bereich (21), der am Seitenwandbereich (11a) befestigt ist, einen zweiten Bereich (22), der an der Versteifungsfläche (14) befestigt ist, und einen dritten Bereich (23), der an einer Stelle des Abschirmkörpers (10; 610) befestigt ist, an der der Abschirmkörper (10, 610) im montierten Zustand mit Hilfe der Bremssattelverschraubung (6) an dem Achsteil (9) festgelegt ist;
**dadurch gekennzeichnet, dass** der Abschirmkörper (10; 610) über das Anbindungselement (2; 20) am Achsteil (9) befestigt ist, wobei der dritte Bereich (23) als Anlagefläche ausgeführt ist, die sich im montierten Zustand mit einer dem Abschirmkörper (10; 610) abgewandten Seite (23a) im Bereich einer Schraubenauflage der Bremssattelverschraubung (6) gegen das Achsteil (9) abstützt.

2. Bremsscheibenabschirmvorrichtung (1; 61) nach Anspruch 1, **gekennzeichnet durch**
(a) eine Durchgangsöffnung (19) des Abschirmkörpers (10; 610) und eine Durchgangsöffnung (28) des dritten Bereichs (23) des Anbindungselements (2; 20), die im montierten Zustand des Abschirmkörpers (10; 610) fluchtend zueinander und zu einem Innengewinde der Bremssattelverschraubung angeordnet sind, wobei
(b) ein Durchmesser der Durchgangsöffnung (19) des Abschirmkörpers (10; 610) größer als ein Durchmesser eines Schraubenkopfes einer in das Innengewinde eingreifenden Schraube (6) der Bremssattelverschraubung ist; und
(c) der Schraubenkopf sich auf einem die Durchgangsöffnung (28) des dritten Bereichs (23) einfassenden Durchgangsöffnungsrand abstützt.

3. Bremsscheibenabschirmvorrichtung (1, 61) nach einem der vorhergehenden Ansprüche, **dadurch gekennzeichnet, dass** der Seitenwandbereich (11, 11a) an einem radial außen liegenden Außensegment zu einem Kragen (12) angewinkelt ist und der Kragen (12) die Versteifungsfläche (14) ausbildet, an der der zweite Bereich (22) des Anbindungselements (2; 20) befestigt ist.

4. Bremsscheibenabschirmvorrichtung (1; 61) nach Anspruch 3, **dadurch gekennzeichnet, dass** der Kragen (12) an einer Stelle, an der er mit dem zweiten Bereich (22) des Anbindungselement verbunden wird, eine plane Anlagefläche (15) aufweist und der zweite Bereich (22) flächig an der planen Anlagefläche (15) aufliegt.

5. Bremsscheibenabschirmvorrichtung (1; 61) nach einem der vorhergehenden Ansprüche, **dadurch gekennzeichnet,**
(a) **dass** der Abschirmkörper (10; 610) im Bereich der Anbindungsstellen zu dem Anbindungselement (2; 20) mit planen Anlageflächen versehen ist,
(b) **dass** der erste (21), der zweite (22) und der dritte (23) Bereich des Anbindungselement (2; 20) jeweils eine plane Auflagefläche aufweisen, die flächig auf einer der planen Anlageflächen des Abschirmkörpers (10; 610) aufliegt und mit dieser durch Vernieten, Verschrauben, Schweißen, Kleben und/oder Löten punktuell (5) verbunden ist.

6. Bremsscheibenabschirmvorrichtung (1; 61) nach einem der vorhergehenden Ansprüche, **dadurch gekennzeichnet, dass** der Abschirmkörper (10; 610) in dem Bereich, wo er am Achsteil (9) befestigt wird, eine Befestigungserhebung (13) aufweist und der zweite Bereich (22) des Anbindungselements (2; 20) an einem radial außenliegendem Bereich (14) der Befestigungserhebung (13) befestigt ist.

7. Bremsscheibenabschirmvorrichtung (1; 61) nach Anspruch 6, **dadurch gekennzeichnet, dass** der erste Bereich (21) des Anbindungselements (2; 20) an einem radial innen liegenden Bereich (11a) des Seitenwandbereichs (11), an dem die Befestigungserhebung (13) angeformt ist, aufliegt.

8. Bremsscheibenabschirmvorrichtung (1; 61) nach Anspruch 7, **dadurch gekennzeichnet, dass** der erste Bereich (21) des Anbindungselements (2; 20) durch zwei im Wesentlichen rechtwinklige Biegungen in entgegengesetzte Biegerichtungen (25, 24) oder durch eine U-förmige Biegung mit dem zweiten Bereich (22) einteilig verbunden ist.

9. Bremsscheibenabschirmvorrichtung (1; 61) nach einem der vorhergehenden Ansprüche, **dadurch gekennzeichnet, dass** an jedem der beiden Endbereiche des Abschirmkörpers (10), an denen der Abschirmkörper (10, 610) im montierten Zustand mit Hilfe der Bremssattelverschraubung (6) an einem Achsteil (9) festgelegt wird, ein Anbindungselement (2; 20) vorgesehen ist.

10. Bremsscheibenabschirmvorrichtung (61) nach Anspruch 9, **dadurch gekennzeichnet, dass** die beiden ersten Bereiche (21) der beiden Anbindungselemente (20) über einen Versteifungsabschnitt (27), der sich entlang eines radial innen liegenden Innensegments des Seitenwandbereichs (11) erstreckt, miteinander verbunden sind.

11. Bremsscheibenabschirmvorrichtung (1; 61) nach einem der vorhergehenden Ansprüche, **dadurch gekennzeichnet,**
(a) **dass** der Seitenwandbereich (10; 610) und die Versteifungsfläche (14) jeweils biegesteif ausgeführt sind; und/oder
(b) **dass** der Seitenwandbereich (11, 11a) um eine erste Achse (Y) biegesteif ausgeführt ist, die senkrecht zum Seitenwandbereich (11, 11a) ist, und die Versteifungsfläche (14) um eine zweite und eine dritte Achse (X, Z) biegesteif ausgeführt ist, wobei die zweite und dritte Achse (X, Z) zueinander und zu der ersten Achse (Y) senkrecht sind.

12. Bremsscheibenabschirmvorrichtung (1; 61) nach einem der vorhergehenden Ansprüche, **dadurch gekennzeichnet, dass** das Anbindungselement (2; 20) als aus Flachmaterial gebildetes einteiliges Bauteil ausgebildet ist.

13. Bremsscheibenabschirmvorrichtung (1; 61) nach einem der vorhergehenden Ansprüche, **dadurch gekennzeichnet,**
(a) **dass** das Achsteil als Achsschenkel (9) oder als Bremsflansch ausgeführt ist, an dem ein Träger (3) des Bremssattels (4) befestigt ist; und/oder
(b) **dass** der Seitenwandbereich Luftdurchtrittsöffnungen (18) mit angeformten Ablenkrippen (19) aufweist; und/oder.
(c) **dass** der Abschirmkörper (10) an einem radial innen liegenden Rand zu einem Kragen (17) angewinkelt ist.

14. Kraftfahrzeug, insbesondere Nutzfahrzeug, aufweisend eine Bremsscheibenabschirmvorrichtung (1; 61) nach einem der vorhergehenden Ansprüche.

## Claims

1. Brake disc shield device (1; 61) for a disc brake of a motor vehicle, in particular utility vehicle, comprising
(a) a shield body (10; 610) which, by means of a brake calliper screw connection (6), can be fixed indirectly or directly to an axle part (9) to which the disc brake is fixed, which shield body has a side wall region (11, 11a) for at least partially covering a brake disc (7) of the disc brake at its side pointing towards a vehicle body and has a stiffening surface (14) which is oriented substantially perpendicular to the side wall region (11); and
(b) an attachment element (2; 20), the wall thickness (t1) of which is preferably greater than a wall thickness (t2) of the shield body (10; 610), which attachment element has a first region (21), which is fastened to the side wall region (11a), a second region (22), which is fastened to the stiffening surface (14), and a third region (23), which is fastened to a location on the shield body (10; 610) at which the shield body (10, 610) is, in the installed state, fixed to the axle part (9) by way of the brake calliper screw connection (6); **characterized in that** the shield body (10; 610) is fastened by way of the attachment element (2; 20) to the axle part (9), wherein the third region (23) is in the form of an abutment surface which, in the installed state, is supported by way of a side (23a) averted from the shield body (10; 610), and in the region of a screw bearing surface of the brake calliper screw connection (6), against the axle part (9).

2. Brake disc shield device (1; 61) according to Claim 1, **characterized by**
(a) a passage opening (19) of the shield body (10; 610) and a passage opening (28) of the third region (23) of the attachment element (2; 20), which passage openings, in the installed state of the shield body (10; 610), are arranged in alignment with respect to one another and with respect to an internal thread of the brake calliper screw connection, wherein
(b) a diameter of the passage opening (19) of the shield body (10; 610) is greater than a diameter of a screw head of a screw (6), which engages into the internal thread, of the brake calliper screw connection; and
(c) the screw head is supported on a passage opening edge which borders the passage opening (28) of the third region (23).

3. Brake disc shield device (1, 61) according to one of the preceding claims, **characterized in that** the side wall region (11, 11a) is, at an outer segment situated radially at the outside, angled to form a collar (12), and the collar (12) forms the stiffening surface (14) to which the second region (22) of the attachment element (2; 20) is fastened.

4. Brake disc shield device (1; 61) according to Claim 4, **characterized in that** the collar (12) has a planar abutment surface (15) at a location at which said collar is connected to the second region (22) of the attachment element, and the second region (22) lies areally against the planar abutment surface (15).

5. Brake disc shield device (1; 61) according to one of the preceding claims, **characterized**
(a) **in that** the shield body (10; 610) is equipped with planar abutment surfaces in the region of the attachment points to the attachment element (2; 20); and
(b) **in that** the first (21), the second (22) and the third (23) region of the attachment element (2; 20) have in each case a planar bearing surface which bears areally on one of the planar abutment surfaces of the shield body (10; 610) and is connected thereto in punctiform fashion (5) by riveting, screw connection, welding, adhesive bonding and/or brazing.

6. Brake disc shield device (1; 61) according to one of the preceding claims, **characterized in that** the shield body (10; 610) has a fastening elevation (13) in the region where it is fastened to the axle part (9), and the second region (22) of the attachment element (2; 20) is fastened to a radially outer region (14) of the fastening elevation (13).

7. Brake disc shield device (1; 61) according to Claim 6, **characterized in that** the first region (21) of the attachment element (2; 20) bears on a radially inner region (11a) of the side wall region (11) on which the fastening elevation (13) is formed.

8. Brake disc shield device (1; 61) according to Claim 7, **characterized in that** the first region (21) of the attachment element (2; 20) is connected in unipartite fashion to the second region (22) by way of two substantially right-angled bends in opposite bending directions (25, 24), or by way of one U-shaped bend.

9. Brake disc shield device (1; 61) according to one of the preceding claims, **characterized in that** an attachment element (2; 20) is provided at each of the two end regions of the shield body (10) at which the shield body (10, 610) is, in the installed state, fixed by means of the brake calliper screw connection (6) to an axle part (9).

10. Brake disc shield device (61) according to Claim 9, **characterized in that** the two first regions (21) of the two attachment elements (20) are connected to one another by way of a stiffening section (27) which extends along an inner segment, situated radially at the inside, of the side wall region (11).

11. Brake disc shield device (1; 61) according to one of the preceding claims, **characterized**
(a) **in that** the side wall region (10; 610) and the stiffening surface (14) are each designed to be flexurally stiff; and/or
(b) **in that** the side wall region (11, 11a) is designed to be flexurally stiff about a first axis (Y) which is perpendicular to the side wall region (11, 11a), and the stiffening surface (14) is designed to be flexurally stiff about a second and a third axis (X, Z), wherein the second and third axes (X, Z) are perpendicular to one another and to the first axis (Y).

12. Brake disc shield device (1; 61) according to one of the preceding claims, **characterized in that** the attachment element (2; 20) is in the form of a unipartite component formed from flat material.

13. Brake disc shield device (1; 61) according to one of the preceding claims, **characterized**
(a) **in that** the axle part is in the form of an axle stub (9) or a brake flange, to which a carrier (3) of the brake calliper (4) is fastened; and/or
(b) **in that** the side wall region has air passage openings (18) with integrally formed diverting fins (19); and/or
(c) **in that** the shield body (10) is, at a radially inner edge, angled to form a collar (17).

14. Motor vehicle, in particular utility vehicle, having a brake disc shield device (1; 61) according to one of the preceding claims.

## Revendications

1. Dispositif de blindage de disque de frein (1 ; 61) pour un frein à disque d'un véhicule automobile, en particulier d'un véhicule utilitaire, comprenant :
(a) un corps de blindage (10 ; 610) qui peut être fixé au moyen d'un vissage d'étrier de frein (6) de manière indirecte ou directe à une partie d'essieu (9) à laquelle est attaché le frein à disque, et qui présente une région de paroi latérale (11, 11a) pour recouvrir au moins en partie un disque de frein (7) du frein à disque au niveau de son côté tourné vers une carrosserie du véhicule, et une surface de rigidification (14) qui est orientée essentiellement perpendiculairement à la région de paroi latérale (11) ; et
(b) un élément de liaison (2 ; 20), dont l'épaisseur de paroi (t1) est de préférence supérieure à une épaisseur de paroi (t2) du corps de blindage (10 ; 610), présentant une première région (21) qui est fixée à la région de paroi latérale (11a), une deuxième région (22) qui est fixée à la région de rigidification (14), et une troisième région (23) qui est fixée à un endroit du corps de blindage (10 ; 610) au niveau duquel le corps de blindage (10, 610) est fixé à la partie d'essieu (9) dans l'état monté, à l'aide du vissage d'étrier de frein (6) ;
**caractérisé en ce que** le corps de blindage (10 ; 610) est fixé à la partie d'essieu (9) par le biais de l'élément de liaison (2 ; 20), la troisième région (23) étant réalisée sous forme de surface d'appui qui, dans l'état monté, s'appuie contre la partie d'essieu (9) avec un côté (23a) opposé au corps de blindage (10 ; 610) dans la région d'un support de vis du vissage d'étrier de frein (6).

2. Dispositif de blindage de disque de frein (1 ; 61) selon la revendication 1, **caractérisé par**
(a) une ouverture de passage (19) du corps de blindage (10 ; 610) et une ouverture de passage (28) de la troisième région (23) de l'élément de liaison (2 ; 20), qui, dans l'état monté du corps de blindage (10 ; 610), sont disposées en affleurement l'une par rapport à l'autre et par rapport à un filetage intérieur du vissage d'étrier de frein,
(b) un diamètre de l'ouverture de passage (19) du corps de blindage (10 ; 610) étant supérieur à un diamètre d'une tête de vis d'une vis (6) du vissage d'étrier de frein s'engageant dans le filetage intérieur ; et
(c) la tête de vis s'appuyant sur un bord d'ouverture de passage entourant l'ouverture de passage (28) de la troisième région (23).

3. Dispositif de blindage de disque de frein (1, 61) selon quelconque des revendications précédentes, **caractérisé en ce que** la région de paroi latérale (11, 11a) est coudée au niveau d'un segment extérieur situé radialement à l'extérieur pour former un col (12) et le col (12) constitue la surface de rigidification (14) au niveau de laquelle est fixée la deuxième région (22) de l'élément de liaison (2 ; 20).

4. Dispositif de blindage de disque de frein (1 ; 61) selon la revendication 3, **caractérisé en ce que** le col (12), à un endroit auquel il est connecté à la deuxième région (22) de l'élément de liaison, présente une surface d'appui plane (15) et la deuxième région (22) repose à plat sur la surface d'appui plane (15).

5. Dispositif de blindage de disque de frein (1 ; 61) selon l'une quelconque des revendications précédentes, **caractérisé en ce que**
(a) le corps de blindage (10 ; 610), dans la région des zones de liaison à l'élément de liaison (2 ; 20), est pourvu de surfaces d'appui planes,
(b) la première (21), la deuxième (22) et la troisième (23) région de l'élément de liaison (2 ; 20) présentent chacune une surface d'appui plane qui repose à plat sur l'une des surfaces d'appui planes du corps de blindage (10 ; 610) et qui est connectée à celle-ci par rivetage, vissage, soudage, collage et/ou brasage de manière ponctuelle (5).

6. Dispositif de blindage de disque de frein (1 ; 61) selon l'une quelconque des revendications précédentes, **caractérisé en ce que** le corps de blindage (10 ; 610), dans la région dans laquelle il est fixé à la partie d'essieu (9), présente un rehaussement de fixation (13) et la deuxième région (22) de l'élément de liaison (2 ; 20) est fixée à une région (14) du rehaussement de fixation (13) située radialement à l'extérieur.

7. Dispositif de blindage de disque de frein (1 ; 61) selon la revendication 6, **caractérisé en ce que** la première région (21) de l'élément de liaison (2 ; 20) repose sur une région située radialement à l'intérieur (11a) de la région de paroi latérale (11) sur laquelle est formé le rehaussement de fixation (13).

8. Dispositif de blindage de disque de frein (1 ; 61) selon la revendication 7, **caractérisé en ce que** la première région (21) de l'élément de liaison (2 ; 20) est connectée d'une seule pièce à la deuxième région (22) par deux courbures essentiellement à angle droit dans des directions de courbure opposées (25, 24) ou par une courbure en forme de U.

9. Dispositif de blindage de disque de frein (1 ; 61) selon l'une quelconque des revendications précédentes, **caractérisé en ce qu**'au niveau de chacune des régions d'extrémité du corps de blindage (10) au niveau desquelles le corps de blindage (10, 610), dans l'état monté, est fixé à une partie d'essieu (9) à l'aide du vissage d'étrier de frein (6), est prévu un élément de liaison (2 ; 20).

10. Dispositif de blindage de disque de frein (61) selon la revendication 9, **caractérisé en ce que** les deux premières régions (21) des deux éléments de liaison (20) sont connectées l'une à l'autre par le biais d'une portion de rigidification (27) qui s'étend le long d'un segment intérieur d'une région de paroi latérale (11) situé radialement à l'intérieur.

11. Dispositif de blindage de disque de frein (1 ; 61) selon l'une quelconque des revendications précédentes, **caractérisé en ce que**
(a) la région de paroi latérale (10 ; 610) et la région de rigidification (14) sont réalisées à chaque fois de manière rigide en flexion ; et/ou
(b) la région de paroi latérale (11, 11a) est réalisée de manière rigide en flexion autour d'un premier axe (Y) qui est perpendiculaire à la région de paroi latérale (11, 11a), et la surface de rigidification (14) est réalisée de manière rigide en flexion autour d'un premier et d'un deuxième axe (X, Z), le premier et le deuxième axe (X, Z) étant perpendiculaires l'un à l'autre et au premier axe (Y).

12. Dispositif de blindage de disque de frein (1 ; 61) selon l'une quelconque des revendications précédentes, **caractérisé en ce que** l'élément de liaison (2 ; 20) est réalisé sous forme de composant d'une seule pièce formé d'un matériau plat.

13. Dispositif de blindage de disque de frein (1 ; 61) selon l'une quelconque des revendications précédentes, **caractérisé en ce que**
(a) la partie d'essieu est réalisée sous forme de fusée d'essieu (9) ou sous forme de flasque de frein, sur lequel ou laquelle est fixé un support (3) de l'étrier de frein (4) ; et/ou
(b) la région de paroi latérale présente des ouvertures de passage d'air (18) avec des nervures d'appui (19) ; et/ou
(c) le corps de blindage (10) est coudé au niveau d'un bord situé radialement à l'intérieur pour former un col (17).

14. Véhicule automobile, en particulier véhicule utilitaire présentant un dispositif de blindage de disque de frein (1 ; 61) selon l'une quelconque des revendications précédentes.
